# FASCICULE DE BREVET EUROPEEN

(11) **EP 3 680 543 B1**
(45) Date de publication et mention de la délivrance du brevet: **04.05.2022**
(21) Numéro de dépôt: 19215506.7
(22) Date de dépôt: 12.12.2019
(51) Int. Cl.: F17C 5/06

(54) **DISPOSITIF ET PROCÉDÉ DE REMPLISSAGE DE RÉSERVOIRS DE GAZ SOUS PRESSION**
FÜLLVORRICHTUNG UND -VERFAHREN FÜR UNTER DRUCK STEHENDE GASTANKS
DEVICE AND METHOD FOR FILLING PRESSURISED GAS TANKS

(30) Priorité: 09.01.2019 FR 1900192
(43) Date de publication de la demande: 15.07.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRANCOIS, Thibaut, 38360 Sassenage (FR)
(74) Mandataire: Air Liquide

(56) Documents cités:
- FR-A1- 3 033 866
- FR-A1- 3 067 094
- US-A1- 2014 352 840
- US-A1- 2017 102 110
- US-A1- 2017 336 028

## Description

L'invention concerne un dispositif et procédé de remplissage de réservoirs de gaz sous pression.

L'invention concerne plus particulièrement un dispositif de remplissage de réservoirs de gaz sous pression, notamment de réservoirs d'hydrogène gazeux de véhicules automobiles, le dispositif comprenant au moins une source de gaz, un circuit de transfert comprenant au moins une extrémité amont reliée à la source et au moins une extrémité aval destinée à être raccordée de façon amovible avec un réservoir à remplir, le circuit de transfert comprenant en outre, entre ses extrémités amont et aval, un ensemble de stockage(s) tampon(s) raccordé(s) en parallèle au circuit de transfert via un ensemble de vanne(s) de raccordement respectives, le circuit de transfert comprenant une portion de conduite(s) formant une boucle, une pluralité des stockage(s) tampon(s) étant reliées en parallèle à ladite boucle.

Il est connu de remplir des réservoirs de gaz sous pression par équilibrage ou cascade (avec un ou des stockages tampons) et/ou par compression direct ou indirecte (cf. par exemple US2017336028A1, JP20031742497 ou FR2891347A).

Dans la plupart des dispositifs connus, le remplissage des stockages tampon utilisés pour le remplissage n'est possible qu'après le remplissage du réservoir.

De plus, des dispositifs connus permettent le remplissage simultané de plusieurs réservoirs mais pour des réservoirs ayant les mêmes conditions de pression initiale. Le remplissage simultané de plusieurs réservoirs ayant des conditions de pressions initiales différentes n'est possible qu'au prix d'une installation lourde et coûteuse (sources de pression dédiées pour chaque ligne de remplissage).

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le circuit de transfert comprend une pluralité d'extrémités aval distinctes destinée chacune à être raccordée de façon amovible avec un réservoir respectif à remplir, lesdites extrémités aval étant raccordées en parallèle à ladite boucle et comportant un ensemble de vanne(s) de liaison respectives, de sorte que le contrôle des vannes de raccordement et des vannes de liaison permet la mise en relation fluidique, via la boucle, d'au moins un premier stockage tampon avec une première extrémité aval et, simultanément, la mise en relation fluidique, via la boucle, d'au moins un second stockage tampon avec une seconde extrémité aval et/ou la mise en relation fluidique de deux stockages tampons distincts.

Par ailleurs, des modes de réalisation de l'invention peuvent comporter l'une ou plusieurs des caractéristiques suivantes :
- la boucle du circuit de transfert comprend un ensemble de vannes d'isolation configurées, selon leur état de fermeture/ouverture, pour bloquer ou autoriser la circulation du fluide dans la boucle vers ou depuis un stockage tampon en contrôlant le sens de circulation dans la boucle
- l'ensemble de vannes d'isolation comprend, pour chaque stockage tampon, deux vannes disposées respectivement de part et d'autre de la liaison du stockage tampon avec la boucle,
- la boucle comprend au moins une vanne située entre deux raccordements adjacents d'extrémités aval à la boucle,
- le circuit de transfert comprend au moins un compresseur comportant une entrée de gaz à comprimer raccordée à l'un au moins parmi : la source, au moins un stockage tampon, et une sortie de gaz comprimée raccordée à au moins l'un parmi : au moins un stockage tampon, au moins l'une des pluralité d'extrémités aval du circuit,
- le dispositif comprend au moins un compresseur disposé en série dans le circuit entre la source et la boucle, c'est-à-dire que l'entrée du compresseur est reliée à la source et la sortie du compresseur est raccordée à la boucle pour permettre d'alimenter en gaz comprimé tout ou partie du ou des stockages tampons et/ou des extrémités aval du circuit via la boucle,
- le dispositif comprend au moins un compresseur disposé dans le circuit, l'entrée du compresseur étant raccordée à une portion de la boucle et la sortie du compresseur étant raccordée à une autre portion de la boucle, pour permettre d'alimenter l'entrée du compresseur avec du fluide provenant de la source et/ou d'au moins un stockage tampon et pour permettre d'alimenter en gaz comprimé par le compresseur tout ou partie des autres stockages tampon et/ou des extrémités aval du circuit via la boucle,
- le dispositif comprend deux compresseurs disposés en parallèle ou en série dans le circuit de transfert,

L'invention concerne également un procédé de remplissage de réservoirs de gaz sous pression, notamment de réservoirs d'hydrogène gazeux de véhicules automobiles, utilisant un dispositif selon l'une quelconque des caractéristiques précédentes ou ci-après, le procédé comportant une étape de transfert de gaz sous pression dans un premier réservoir raccordé à une première extrémité aval du circuit de transfert via une première portion de la boucle.

Selon d'autres particularités possibles :
- le procédé comporte, simultanément à l'étape de transfert de gaz sous pression dans le premier réservoir, une étape de transfert de gaz sous pression dans un second réservoir raccordé à une seconde extrémité aval du circuit de transfert via une seconde portion de la boucle,
- lors de l'étape de transfert de gaz sous pression dans le second réservoir, le gaz sous pression est fourni par au moins un stockage tampon, notamment plusieurs stockages tampons utilisés successivement en cascade et/ou par un compresseur
- le procédé comporte, simultanément à l'étape de transfert de gaz sous pression dans le premier réservoir, une étape de transfert de gaz sous pression dans au moins un stockage tampon via une autre portion de la boucle
- lors de l'étape de transfert de gaz sous pression dans au moins un stockage tampon, le gaz sous pression est fourni par au moins un stockage tampon, notamment plusieurs stockages tampons utilisés successivement en cascade et/ou par un compresseur,
- lors de l'étape de transfert de gaz sous pression dans le premier réservoir le gaz sous pression est fourni par au moins un stockage tampon, notamment plusieurs stockages tampons utilisés successivement en cascade et/ou par un compresseur

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'un premier exemple de réalisation d'un dispositif selon l'invention,
[Fig. 2] représente une vue schématique et partielle illustrant la structure et le fonctionnement d'un deuxième exemple de réalisation d'un dispositif selon l'invention.

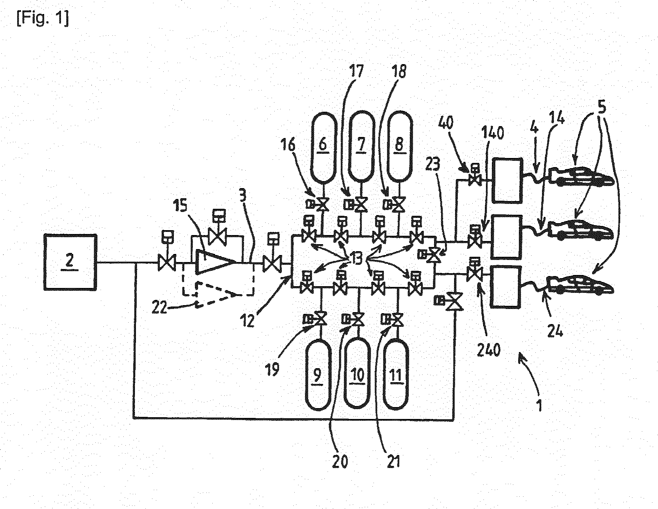

Le dispositif 1 de remplissage de réservoirs de gaz sous pression (station-service par exemple) représenté à la [Fig. 1] comprend une source 2 de gaz, un circuit 3 de transfert comprenant au moins une extrémité amont reliée à la source 2 et plusieurs extrémités aval 4 destinées à être raccordées de façon amovible avec des réservoirs 5 respectifs à remplir.

La source 2 peut comprendre un ou des réservoirs de gaz sous pression et/ou un ou des stockages de gaz liquéfié (associés ou non à un système de vaporisation), un ou des électrolyseurs et/ou tout autre source de gaz sous pression appropriée.

Le circuit 3 de transfert comprend, entre ses extrémités amont et aval, une portion de conduite(s) formant une boucle 12. C'est-à-dire que la boucle 12 est formée par un ou plusieurs tronçons de conduites permettant une circulation du gaz sous pression dans un sens (ou dans le sens contraire) entre deux éléments raccordés à des endroits distincts de la boucle 12. Par exemple, théoriquement le gaz peut transiter dans la boucle et revenir au point de départ en circulant dans un sens ou dans le sens opposé.

Le circuit 3 comprend un ensemble de stockage(s) tampon(s) 6 à 11 raccordé(s) en parallèle au circuit (3) de transfert via un ensemble de vanne(s) 16 à 21 de raccordement respectives. Plus précisément, les stockage(s) tampon(s) 6 à 11 sont raccordés en parallèle à ladite boucle 12. C'est-à-dire que chacun des stockage tampons (six dans cet exemple) peut être relié fluidiquement avec les autres stockages tampons via la boucle 12 (avec un flux de gaz dans un sens ou dans l'autre dans la boucle 12) .

De même, les extrémités aval 4 (trois dans cet exemple) du circuit 3 sont raccordées en parallèle à ladite boucle 12. De préférence, chacune des extrémités aval comprend une vanne 14, 140, 240 de liaison respective.

Ainsi, le contrôle des vannes de raccordement 16 à 21 et des vannes de liaison 14, 140, 240 permet, via la boucle 12, la mise en relation fluidique (ou non) de chaque stockage tampon avec chacune des premières extrémités 4 aval. De même, ce même contrôle des vannes permet la mise en relation fluidique, via la boucle (12), d'au moins un premier stockage tampon avec une première extrémité aval et, simultanément, la mise en relation fluidique, via la boucle (12) d'au moins un second stockage tampon avec une seconde extrémité aval et/ou la mise en relation fluidique de deux stockages tampons distincts.

C'est-à-dire que cette architecture permet de remplir plusieurs réservoirs 5 en même temps à partir de stockages tampons respectifs différents. De même, ceci permet le cas échant simultanément le remplissage d'un ou plusieurs stockages tampons.

La boucle 12 du circuit 3 de transfert comprend ainsi de préférence un ensemble de vannes 13 d'isolation configurées, selon leur état de fermeture/ouverture, pour bloquer ou autoriser la circulation du fluide dans la boucle 12 vers ou depuis un stockage tampon en contrôlant le sens de circulation dans la boucle 12.

Par exemple, l'ensemble de vannes 13 d'isolation comprend, pour chaque stockage tampon, deux vannes 13 disposées respectivement de part et d'autre de la liaison du stockage tampon avec la boucle 12. Ainsi, en fermant ces deux vannes 13 l'accès au stockage tampon est fermé. En cas d'ouverture de l'un des deux vannes la circulation de fluide est possible entre la boucle 12 et le stockage tampon du côté de la vanne ouverte sans affecter le stockage tampon adjacent situé après l'autre vanne qui est fermée.

De même, comme illustré à la [Fig. 1], la boucle 12 comprend de préférence une vanne 23 située entre deux raccordements adjacents d'extrémités aval 4 à la boucle 12. En position fermée, cette vanne 23 permet d'alimenter la ou les extrémités aval 4 situées d'un côté de cette vanne (via une portion de la boucle avec circulation du gaz dans un premier sens de circulation) et, simultanément, d'alimenter la ou les extrémités aval 4 située de l'autre côté de cette vanne 23 (via une autre portion de la boucle 12 avec circulation du gaz dans un sens opposé au premier sens de circulation).

Le circuit 3 peut comporter avantageusement au moins un compresseur 15 disposé en série entre la source 2 et la boucle 12. Comme visible à la [Fig. 1], le circuit peut notamment comporter un ensemble de deux compresseurs 15, 22 (ou plus) montés en parallèle entre la source 2 et la boucle 12.

Le compresseurs 15 comprend ainsi une entrée de gaz à comprimer raccordée à la source 2 et une sortie de gaz comprimée raccordée à la boucle 12 (et donc aux stockages tampons et aux extrémités aval 4 du circuit).

Ainsi, en contrôlant l'ouverture des vannes appropriées il est possible de remplir un ou des stockages tampons et/ou d'alimenter une ou des extrémités aval 4 avec le compresseur 15 pendant par exemple que d'autres stockages tampons sont utilisés pour remplir d'autre(s) réservoir(s) 5.

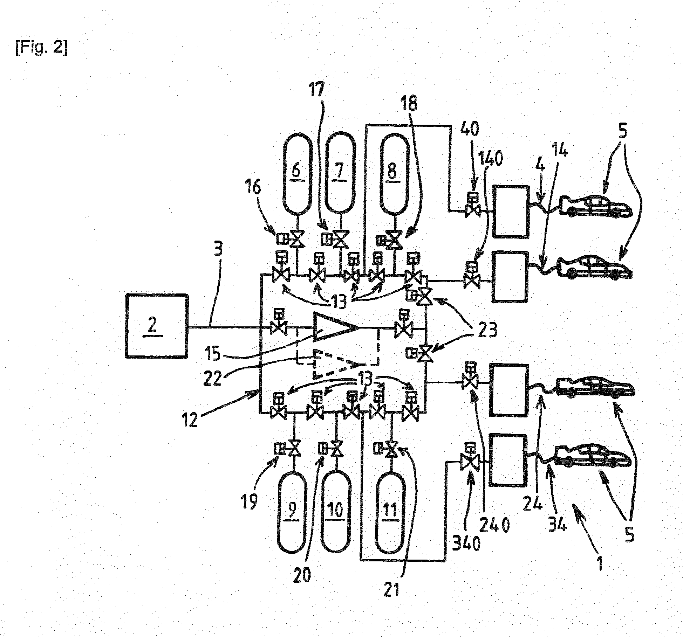

Le mode de réalisation de la [Fig. 2] se distingue de celui de la [Fig. 1] essentiellement en ce que le ou les compresseurs 15, 22 sont disposés « au milieu » de la boucle 12. C'est-à-dire que l'entrée du compresseur 15, 22 est raccordée à une portion de la boucle 12 et la sortie du compresseur 15, 22 est raccordée à une autre portion de la boucle 12. Cette configuration permet d'une part d'alimenter l'entrée du compresseur 15, 22 avec du fluide provenant de la source 2 et/ou de n'importe le(s)quel(s) des stockages tampons et, d'autre part, d'alimenter en gaz comprimé par le compresseur 15, 22 tout ou partie des autres stockages tampons et/ou des extrémités aval 4 du circuit.

Le dispositif selon l'invention permet ainsi d'alimenter en gaz sous pression un ou plusieurs réservoirs 5 avec n'importe quel(s) stockage(s) tampon(s) (par exemple avec les stockages tampons ayant la pression la plus élevée) et, en même temps, de (re)remplir les stockages tampons (via par exemple le compresseur 15).

Ainsi, un, deux ou trois stockages 6, 7, 8 tampons peuvent être utilisés pour le remplissage d'un premier réservoir 5 tandis que, pendant ce temps, un, deux ou tous les autres stockages tampons 9, 10, 11 sont remplis par le compresseur 15. De même, simultanément deux réservoirs 5 ou plus peuvent être remplis respectivement par deux ensembles respectifs de stockage(s) tampon(s) tandis que, en même temps, un troisième ensemble de stockage(s) tampon(s) est rempli par le compresseur 15.

Ainsi, bien que de structure simple et peu coûteuse, le dispositif permet de réaliser plusieurs cascades/remplissages simultanés de plusieurs réservoirs 5.

Ceci permet d'optimiser les temps de remplissage et de repressurisation de l'installation.

Cette solution permet également de diminuer le nombre de stockages tampons nécessaires par flexible de remplissage (extrémité aval 4).

En effet, au lieu d'utiliser par exemple trois stockages tampons (400 litres et 900bar) pour chaque extrémité 4 aval (« dispenser » en anglais), six de ces stockages tampons pourraient être suffisants pour alimenter trois extrémités aval 4 (c'est-à-dire trois flexibles de remplissages de réservoirs 5).

Cette mutualisation modulaire flexible permet une réduction des coûts de l'ordre de 50%.

Cette solution permet également une optimisation des consommations électrique du compresseur 15 car ce dernier peut utiliser des sources à haute pression (stockages tampon cas de la [Fig. 2]) qui réduit sa consommation électrique et augmente son débit.

Ainsi l'installation est plus souvent disponible pour des remplissages car le temps nécessaire au remplissage des stockages tampons entre deux utilisations est diminué.

Tout ou partie des éléments (vannes, compresseur...) peuvent être contrôlés et pilotés par un organe de commande électronique de stockage et de traitement de données comprenant par exemple un microprocesseur et notamment un ordinateur. Classiquement, le débit et/ou la pression du gaz transféré dans les réservoirs 5 peut notamment être contrôlé pour suivre une montée en pression/température/densité ou autre (pré)déterminée.

Comme illustré, la boucle peut être dépourvue de compresseur.

## Revendications

1. Dispositif de remplissage de réservoirs de gaz sous pression, notamment de réservoirs d'hydrogène gazeux de véhicules automobiles, le dispositif comprenant au moins une source (2) de gaz, un circuit (3) de transfert comprenant au moins une extrémité amont reliée à la source (2) et au moins une extrémité aval (4) destinée à être raccordée de façon amovible avec un réservoir (5) à remplir, le circuit (3) de transfert comprenant en outre, entre ses extrémités amont et aval, un ensemble de stockage(s) tampons (6 à 11) raccordé(s) en parallèle au circuit (3) de transfert via un ensemble de vanne(s) (16 à 21) de raccordement respectives, le circuit (3) de transfert comprenant une portion de conduite (s) formant une boucle (12), une pluralité des stockage(s) tampon (6 à 11) étant reliées en parallèle à ladite boucle (12), **caractérisé en ce que** le circuit (3) de transfert comprend une pluralité d'extrémités aval (4) distinctes destinée chacune à être raccordée de façon amovible avec un réservoir (5) respectif à remplir, lesdites extrémités aval (4) étant raccordées en parallèle à ladite boucle (12) et comportant un ensemble de vanne(s) (40, 140, 240, 340) de liaison respectives, de sorte que le contrôle des vannes de raccordement et des vannes de liaison permet la mise en relation fluidique, via la boucle (12), d'au moins un premier stockage tampon avec une première extrémité aval et, simultanément, la mise en relation fluidique, via la boucle (12), d'au moins un second stockage tampon avec une seconde extrémité aval et/ou la mise en relation fluidique de deux stockages tampons distincts.

2. Dispositif selon la revendication 1, **caractérisé en ce que** la boucle (12) du circuit (3) de transfert comprend un ensemble de vannes (13) d'isolation configurées, selon leur état de fermeture/ouverture, pour bloquer ou autoriser la circulation du fluide dans la boucle (12) vers ou depuis un stockage tampon en contrôlant le sens de circulation dans la boucle (12).

3. Dispositif selon la revendication 2, **caractérisé en ce que** l'ensemble de vannes (13) d'isolation comprend, pour chaque stockage tampon, deux vannes disposées respectivement de part et d'autre de la liaison du stockage tampon avec la boucle (12).

4. Dispositif selon l'une quelconque des revendications 1 à 3, **caractérisé en ce que** la boucle (12) comprend au moins une vanne (13, 23) située entre deux raccordements adjacents d'extrémités aval (4) à la boucle (12).

5. Dispositif selon l'une quelconque des revendications 1 à 4, **caractérisé en ce que** le circuit (3) de transfert comprend au moins un compresseur (15, 22) comportant une entrée de gaz à comprimer raccordée à l'un au moins parmi : la source (2), au moins un stockage tampon, et une sortie de gaz comprimée raccordée à au moins l'un parmi : au moins un stockage tampon, au moins l'une des pluralité d'extrémités aval (4) du circuit (3).

6. Dispositif selon la revendication 5, **caractérisé en ce qu'**il comprend au moins un compresseur (15, 22) disposé en série dans le circuit entre la source (2) et la boucle (12), c'est-à-dire que l'entrée du compresseur (15, 22) est reliée à la source (2) et la sortie du compresseur (15, 22) est raccordée à la boucle (12) pour permettre d'alimenter en gaz comprimé tout ou partie des stockage tampon et/ou des extrémités aval (4) du circuit via la boucle (12).

7. Dispositif selon la revendication 5, **caractérisé en ce qu'**il comprend au moins un compresseur (15, 22) disposé dans le circuit (3), l'entrée du compresseur (15, 22) étant raccordée à une portion de la boucle (12) et la sortie du compresseur (15, 22) étant raccordée à une autre portion de la boucle (12), pour permettre d'alimenter l'entrée du compresseur (15, 22) avec du fluide provenant de la source (2) et/ou d'au moins un stockage tampon et pour permettre d'alimenter en gaz comprimé par le compresseur (15, 22) tout ou partie des autres stockages tampon et/ou des extrémités aval (4) du circuit via la boucle (12).

8. Dispositif selon l'une quelconque des revendications 5 à 7, **caractérisé en ce qu'**il comprend deux compresseurs (15, 22) disposés en parallèle ou en série dans le circuit (3) de transfert.

9. Procédé de remplissage de réservoirs de gaz sous pression, notamment de réservoirs d'hydrogène gazeux de véhicules automobiles, utilisant un dispositif selon l'une quelconque des revendications précédentes, le procédé comportant une étape de transfert de gaz sous pression dans un premier réservoir (5) raccordé à une première extrémité aval (4) du circuit (3) de transfert via une première portion de la boucle (12).

10. Procédé selon la revendication 9, **caractérisé en ce qu'**il comporte, simultanément à l'étape de transfert de gaz sous pression dans le premier réservoir (5), une étape de transfert de gaz sous pression dans un second réservoir (5) raccordé à une seconde extrémité aval (4) du circuit (3) de transfert via une seconde portion de la boucle (12).

11. Procédé selon la revendication 10, **caractérisé en ce que** lors de l'étape de transfert de gaz sous pression dans le second réservoir (5), le gaz sous pression est fourni par au moins un stockage tampon, notamment plusieurs stockages tampon utilisés successivement en cascade et/ou par un compresseur (15, 22).

12. Procédé selon l'une quelconque des revendications 9 à 11, **caractérisé en ce qu'**il comporte, simultanément à l'étape de transfert de gaz sous pression dans le premier réservoir (5), une étape de transfert de gaz sous pression dans au moins un stockage tampon via une autre portion de la boucle (12).

13. Procédé selon la revendication 12, **caractérisé en ce que**, lors de l'étape de transfert de gaz sous pression dans au moins un stockage tampon, le gaz sous pression est fourni par au moins un stockage tampon, notamment plusieurs stockages tampon utilisés successivement en cascade et/ou par un compresseur (15, 22).

14. Procédé selon l'une quelconque des revendications 9 à 13, **caractérisé en ce que**, lors de l'étape de transfert de gaz sous pression dans le premier réservoir (5) le gaz sous pression est fourni par au moins un stockage tampon, notamment plusieurs stockages tampon utilisés successivement en cascade et/ou par un compresseur (15, 22).

## Patentansprüche

1. Vorrichtung zum Befüllen von Tanks für unter Druck stehendes Gas, insbesondere von Kraftfahrzeugtanks für gasförmigen Wasserstoff, wobei die Vorrichtung mindestens eine Gasquelle (2), einen Transferkreis (3), der mindestens ein mit der Quelle (2) verbundenes stromaufwärtiges Ende und mindestens ein stromabwärtiges Ende (4), das zum lösbaren Anschließen an den zu befüllenden Tank (5) bestimmt ist, aufweist, wobei der Transferkreis (3) ferner zwischen seinen stromaufwärtigen und stromabwärtigen Enden eine Anordnung aus einem oder mehreren Pufferspeicher(n) (6 bis 11) aufweist, der(die) an den Transferkreis (3) parallel über eine Anordnung aus einem oder mehreren jeweiligen Anschlussventil(en) (16 bis 21) angeschlossen ist(sind), wobei der Transferkreis (3) einen Abschnitt aus einer oder mehreren Leitung(en) aufweist, die eine Ringleitung (12) bildet(bilden), wobei eine Mehrzahl der Pufferspeicher (6 bis 11) parallel mit der Ringleitung (12) verbunden ist, **dadurch gekennzeichnet, dass** der Transferkreis (3) eine Mehrzahl von verschiedenen stromabwärtigen Enden (4) aufweist, die jeweils dazu bestimmt sind, lösbar an einen jeweiligen zu befüllenden Tank (5) angeschlossen zu werden, wobei die stromabwärtigen Enden (4) parallel an die Ringleitung (12) angeschlossen sind und eine Anordnung aus jeweiligen Verbindungsventil(en) (40, 140, 240, 340) umfassen, so dass die Steuerung der Anschlussventile und der Verbindungsventile es ermöglicht, über die Ringleitung (12), mindestens einen ersten Pufferspeicher mit einem ersten stromabwärtigen Ende in Fluidverbindung zu bringen und gleichzeitig, über die Ringleitung (12), mindestens einen zweiten Pufferspeicher mit einem zweiten stromabwärtigen Ende in Fluidverbindung zu bringen und/oder zwei verschiedene Pufferspeicher in Fluidverbindung zu bringen.

2. Vorrichtung nach Anspruch 1, **dadurch gekennzeichnet, dass** die Ringleitung (12) des Transferkreises (3) eine Anordnung aus Absperrventilen (13) aufweist, die je nach ihrem Schließ-/Öffnungszustand dazu ausgelegt sind, die Zirkulation des Fluids in der Ringleitung (12) zu oder von einem Pufferspeicher zu blockieren oder zuzulassen und dabei die Zirkulationsrichtung in der Ringleitung (12) zu steuern.

3. Vorrichtung nach Anspruch 2, **dadurch gekennzeichnet, dass** die Anordnung (13) aus Absperrventilen für jeden Pufferspeicher zwei Ventile aufweist, die jeweils beidseits der Verbindung des Pufferspeichers mit der Ringleitung (12) angeordnet sind.

4. Vorrichtung nach einem der Ansprüche 1 bis 3, **dadurch gekennzeichnet, dass** die Ringleitung (12) mindestens ein Ventil (13, 23) aufweist, das zwischen zwei benachbarten Anschlüssen von stromabwärtigen Enden (4) an die Ringleitung (12) gelegen ist.

5. Vorrichtung nach einem der Ansprüche 1 bis 4, **dadurch gekennzeichnet, dass** der Transferkreis (3) mindestens einen Kompressor (15, 22) aufweist, der einen Einlass für zu verdichtendes Gas umfasst, der an mindestens einen angeschlossen ist unter: die Quelle (2), mindestens ein Pufferspeicher, und einen Auslass für verdichtetes Gas, der an mindestens einen angeschlossen ist unter: mindestens ein Pufferspeicher, mindestens eines der Mehrzahl von stromabwärtigen Enden (4) des Kreises (3).

6. Vorrichtung nach Anspruch 5, **dadurch gekennzeichnet, dass** sie mindestens einen Kompressor (15, 22) aufweist, der in dem Kreis in Reihe zwischen der Quelle (2) und der Ringleitung (12) angeordnet ist, das heißt, dass der Einlass des Kompressors (15, 22) mit der Quelle (2) verbunden ist und der Auslass des Kompressors (15, 22) an die Ringleitung (12) angeschlossen ist, um zu ermöglichen, alle oder einen Teil der Pufferspeicher und/oder stromabwärtigen Enden (4) des Kreises über die Ringleitung (12) mit verdichtetem Gas zu versorgen.

7. Vorrichtung nach Anspruch 5, **dadurch gekennzeichnet, dass** sie mindestens einen Kompressor (15, 22) aufweist, der in dem Kreis (3) angeordnet ist, wobei der Einlass des Kompressors (15, 22) an einen Abschnitt der Ringleitung (12) angeschlossen ist und der Auslass des Kompressors (15, 22) an einen anderen Abschnitt der Ringleitung (12) angeschlossen ist, um zu ermöglichen, den Einlass des Kompressors (15, 22) mit Fluid zu versorgen, das von der Quelle (2) und/oder von mindestens einem Pufferspeicher kommt, und um zu ermöglichen, mit vom Kompressor (15, 22) verdichtetem Gas alle oder einen Teil der anderen Pufferspeicher und/oder der stromabwärtigen Enden (4) des Kreises über die Ringleitung (12) zu versorgen.

8. Vorrichtung nach einem der Ansprüche 5 bis 7, **dadurch gekennzeichnet, dass** sie zwei Kompressoren (15, 22) aufweist, die parallel oder in Reihe in dem Transferkreis (3) angeordnet sind.

9. Verfahren zum Befüllen von Tanks für unter Druck stehendes Gas, insbesondere von Kraftstofftanks für gasförmigen Wasserstoff, das eine Vorrichtung nach einem der vorhergehenden Ansprüche einsetzt, wobei das Verfahren einen Schritt des Transfers von unter Druck stehendem Gas in einen ersten Tank (5) umfasst, der an ein erstes stromabwärtiges Ende (4) des Transferkreises (3) über einen ersten Abschnitt der Ringleitung (12) angeschlossen ist.

10. Verfahren nach Anspruch 9, **dadurch gekennzeichnet, dass** es gleichzeitig zum Schritt des Transfers von unter Druck stehendem Gas in den ersten Tank (5) einen Schritt des Transfers von unter Druck stehendem Gas in einen zweiten Tank (5) umfasst, der an ein zweites stromabwärtiges Ende (4) des Transferkreises (3) über einen zweiten Abschnitt der Ringleitung (12) angeschlossen ist.

11. Verfahren nach Anspruch 10, **dadurch gekennzeichnet, dass** beim Schritt des Transfers von unter Druck stehendem Gas in den zweiten Tank (5) das unter Druck stehende Gas von mindestens einem Pufferspeicher, insbesondere mehreren Pufferspeichern, die nacheinander kaskadiert verwendet werden, und/oder von einem Kompressor (15, 22) abgegeben wird.

12. Verfahren nach einem der Ansprüche 9 bis 11, **dadurch gekennzeichnet, dass** es gleichzeitig zum Schritt des Transfers von unter Druck stehendem Gas in den ersten Tank (5) einen Schritt des Transfers von unter Druck stehendem Gas in mindestens einen Pufferspeicher über einen anderen Abschnitt der Ringleitung (12) umfasst.

13. Verfahren nach Anspruch 12, **dadurch gekennzeichnet, dass** beim Schritt des Transfers von unter Druck stehendem Gas in mindestens einen Pufferspeicher das unter Druck stehende Gas von mindestens einem Pufferspeicher, insbesondere mehreren Pufferspeichern, die nacheinander kaskadiert verwendet werden, und/oder von einem Kompressor (15, 22) abgegeben wird.

14. Verfahren nach einem der Ansprüche 9 bis 13, **dadurch gekennzeichnet, dass** beim Schritt des Transfers von unter Druck stehendem Gas in den ersten Tank (5) das unter Druck stehende Gas von mindestens einem Pufferspeicher, insbesondere mehreren Pufferspeichern, die nacheinander kaskadiert verwendet werden, und/oder von einem Kompressor (15, 22) abgegeben wird.

## Claims

1. Device for filling tanks with pressurized gas, in particular hydrogen gas tanks of motor vehicles, the device comprising at least one gas source (2), a transfer circuit (3) comprising at least one upstream end connected to the source (2) and at least one downstream end (4) intended to be connected in removable fashion to a tank (5) to be filled, the transfer circuit (3) additionally comprising, between its upstream and downstream ends, a set of buffer storage container(s) (6 to 11) which is (are) connected in parallel to the transfer circuit (3) via a set of respective connecting valve(s) (16 to 21), the transfer circuit (3) comprising a portion of pipe(s) forming a loop (12), a plurality of the buffer storage container(s) (6 to 11) being connected in parallel to the said loop (12), **characterized in that** the transfer circuit (3) comprises a plurality of separate downstream ends (4) each intended to be connected in removable fashion to a respective tank (5) to be filled, the said downstream ends (4) being connected in parallel to the said loop (12) and comprising a set of respective linking valve(s) (40, 140, 240, 340), so that control of the connecting valves and of the linking valves makes it possible to bring at least one first buffer storage container into fluidic communication, via the loop (12), with a first downstream end and, simultaneously, to bring at least one second buffer storage container into fluidic communication, via the loop (12), with a second downstream end and/or to bring two separate buffer storage containers into fluidic communication.

2. Device according to Claim 1, **characterized in that** the loop (12) of the transfer circuit (3) comprises a set of isolation valves (13) configured, according to their closing/opening state, to block or allow the circulation of the fluid in the loop (12) to or from a buffer storage container by controlling the direction of circulation in the loop (12).

3. Device according to Claim 2, **characterized in that** the set of isolation valves (13) comprises, for each buffer storage container, two valves respectively positioned on either side of the link of the buffer storage container with the loop (12).

4. Device according to any one of Claims 1 to 3, **characterized in that** the loop (12) comprises at least one valve (13, 23) located between two adjacent connections of downstream ends (4) to the loop (12).

5. Device according to any one of Claims 1 to 4, **characterized in that** the transfer circuit (3) comprises at least one compressor (15, 22) comprising an inlet for gas to be compressed connected to at least one from among: the source (2), at least one buffer storage container, and a compressed gas outlet connected to at least one from among: at least one buffer storage container, at least one of the plurality of downstream ends (4) of the circuit (3).

6. Device according to Claim 5, **characterized in that** it comprises at least one compressor (15, 22) positioned in series in the circuit between the source (2) and the loop (12), that is to say that the inlet of the compressor (15, 22) is connected to the source (2) and the outlet of the compressor (15, 22) is connected to the loop (12) in order to make it possible to feed with compressed gas all or some of the buffer storage containers and/or of the downstream ends (4) of the circuit via the loop (12).

7. Device according to Claim 5, **characterized in that** it comprises at least one compressor (15, 22) positioned in the circuit (3), the inlet of the compressor (15, 22) being connected to a portion of the loop (12) and the outlet of the compressor (15, 22) being connected to another portion of the loop (12), in order to make it possible to feed the inlet of the compressor (15, 22) with fluid originating from the source (2) and/or from at least one buffer storage container and in order to make it possible to feed with gas compressed by the compressor (15, 22) all or some of the other buffer storage containers and/or of the downstream ends (4) of the circuit via the loop (12).

8. Device according to any one of Claims 5 to 7, **characterized in that** it comprises two compressors (15, 22) positioned in parallel or in series in the transfer circuit (3).

9. Method for filling tanks with pressurized gas, in particular hydrogen gas tanks of motor vehicles, using a device according to any one of the preceding claims, the method comprising a stage of transfer of pressurized gas into a first tank (5) connected to a first downstream end (4) of the transfer circuit (3) via a first portion of the loop (12).

10. Method according to Claim 9, **characterized in that** it comprises, simultaneously with the stage of transfer of pressurized gas into the first tank (5), a stage of transfer of pressurized gas into a second tank (5) connected to a second downstream end (4) of the transfer circuit (3) via a second portion of the loop (12).

11. Method according to Claim 10, **characterized in that**, during the stage of transfer of pressurized gas into the second tank (5), the pressurized gas is provided by at least one buffer storage container, in particular several buffer storage containers used successively in cascade, and/or by a compressor (15, 22).

12. Method according to any one of Claims 9 to 11, **characterized in that** it comprises, simultaneously with the stage of transfer of pressurized gas into the first tank (5), a stage of transfer of pressurized gas into at least one buffer storage container via another portion of the loop (12).

13. Method according to Claim 12, **characterized in that**, during the stage of transfer of pressurized gas into at least one buffer storage container, the pressurized gas is provided by at least one buffer storage container, in particular several buffer storage containers used successively in cascade, and/or by a compressor (15, 22).

14. Method according to any one of Claims 9 to 13, **characterized in that**, during the stage of transfer of pressurized gas into the first tank (5), the pressurized gas is provided by at least one buffer storage container, in particular several buffer storage containers used successively in cascade, and/or by a compressor (15, 22).
